# EUROPÄISCHE PATENTANMELDUNG

(11) **EP 1 043 142 A2**
(43) Veröffentlichungstag der Anmeldung: **11.10.2000**
(21) Anmeldenummer: 00890105.0
(22) Anmeldetag: 30.03.2000
(51) Int. Cl.: B29C 47/90

(54) **Verfahren zum Abkühlen von extrudierten Hohlprofilen**

(30) Priorität: 01.04.1999 AT 58899
(71) Anmelder: Technoplast Kunststofftechnik Gesellschaft m.b.H., 4563 Micheldorf (AT)
(72) Erfinder: Dorninger, Frank, Ing., 4563 Micheldorf (AT); Schwaiger, Meinhard, Dipl.-Ing., 4040 Linz (AT)
(74) Vertreter: Babeluk, Michael, Dipl.-Ing. Mag.

(57) **Zusammenfassung**

Die Erfindung betrifft ein Verfahren zum Abkühlen von extrudierten Hohlprofilen (2), die insbesondere zur Herstellung von Fenstern bestimmt sind, bei dem das Hohlprofil (2) durch eine Extrusionsdüse (1) ausgestoßen wird, um in Extrusionswerkzeugen abgekühlt und kalibriert zu werden, mit folgenden Schritten:
- Eindüsen eines fein zerstäubten flüssigen Kühlmediums durch eine Düse (12) in eine Profilkammer (2a), die zur stromabwärtigen Seite des Profils (2) hin offen ist;
- Vollständiges Verdampfen des Kühlmedium an den Wänden (5) der Profilkammer (2a);
- Absaugen des verdampften Kühlmediums aus der Profilkammer (2a).
Eine beschleunigte Abkühlung wird bei hoher Qualität dadurch erreicht, dass das Kühlmedium in Extrusionsrichtung stromabwärts von der Düse (12) aus der Profilkammer (2a) abgesaugt wird.

## Beschreibung

Die vorliegende Erfindung betrifft ein Verfahren zum Abkühlen von extrudierten Hohlprofilen, die insbesondere zur Herstellung von Fenstern bestimmt sind, bei dem das Hohlprofil durch eine Extrusionsdüse ausgestoßen wird, um in Extrusionswerkzeugen abgekühlt und kalibriert zu werden, mit folgenden Schritten:
- Eindüsen eines fein zerstäubten flüssigen Kühlmediums durch eine Düse in eine Profilkammer, die zur stromabwärtigen Seite des Profils hin offen ist;
- Vollständiges Verdampfen des Kühlmediums an den Wänden der Profilkammer;
- Absaugen des verdampften Kühlmediums aus der Profilkammer.

Bei der Herstellung von Kunststoffprofilen, wie sie bei der Herstellung von Türen, Fenstern u. dgl. verwendet werden, wird ein Profilstrang in teigigem Zustand aus einer Extrusionsdüse ausgestoßen, die an einem Extruder angebracht ist. In nachfolgenden Kühl- und Kalibrierwerkzeugen wird der Profilstrang abgekühlt und in eine ganz genau definierte Form kalibriert. In solchen Kalibrierwerkzeugen wird Vakuum an die Formflächen des Werkzeugs angelegt, wodurch einerseits die Form des Profils genau festgelegt wird und andererseits durch den Kontakt mit den gekühlten Formflächen eine Abkühlung des Profils bewirkt wird. Naturgemäß erfolgt eine solche Abkühlung nur von außen, so dass die Innenstege des Profils relativ weich bleiben, da die Wärme durch die relativ schlecht wärmeleitende PVC-Masse hindurch abgeführt werden muss. Bei höheren Extrusionsgeschwindigkeiten und bei Anlagen eines stärkeren Vakuums in den Kalibrierwerkzeugen kann dies zu Problemen führen, die beispielsweise in einer welligen Ausbildung der inneren Profilstege bestehen.

Um auch aus den inneren Bereichen des Profils die Wärme schnell abführen zu können, sind Innenkühlungsvorrichtungen vorgeschlagen worden.

Die DE 24 55 779 beschreibt eine Vorrichtung zum Abkühlen von Rohren, bei der in das Rohr ein Kühlmedium eingebracht wird, das an der heißen Innenfläche des Rohres verdampft. Die Profilkammer ist dabei durch einen Stopfen verschlossen, und das Kühlmedium wird zusammen mit Druckluft im Bereich dieses Stopfens eingebracht. Das an der Innenfläche des Profils verdampfte Kühlmedium wird entgegen der Extrusionsrichtung durch eine Öffnung im Dorn abgesaugt und abgeführt.

Aus der FR 2 512 391 A ist ein Verfahren bekannt, bei dem das Kühlmedium vor dem Eintritt in die Extrusionsdüse zerstäubt wird. Der entstehende Dampf verbleibt jedoch in der Profilkammer und kann erst an der stromabwärtigen Seite im Bereich der Säge entweichen, die den Profilstrang in Stangen schneidet. Daher kommt es auf dem relativ langen Strömungsweg zu einer Rückkondensation, was bedeutet, dass die hergestellten Profilabschnitte im inneren Bereich feucht sind. Im Extremfall kann dies dazu führen, dass noch bei der Fensterherstellung Feuchtigkeit in den Innenräumen des Profils vorhanden ist.

Aus der AT 348 743 B ist ferner eine Vorrichtung zur Innenkalibrierung aus einer Strangpresse austretenden Hohlprofilen bekannt. Dabei wird ein Kühlmedium in den Profilhohlraum eingebracht und wieder abgesaugt. Dieser Vorgang wird allerdings im Bereich eines Kalibrierdorns durchgeführt, der in einer solchen Form nur bei Rohrprofilen einsetzbar ist. Eine Zerstäubung des Kühlmediums oder eine Verdampfung ist bei dieser Vorrichtung nicht vorgesehen.

Aus der GB 783 449 A ist eine Vorrichtung zur Extrusion von Rohren bekannt. Dabei wird ein Rohr von einer senkrecht nach oben gerichteten Extrusionsdüse extrudiert und bis zu einer vorbestimmten Füllhöhe innen mit Flüssigkeit gefüllt. Die Flüssigkeit hat als primäre Aufgabe durch den statischen Druck ein Anpressen des Rohres an ein Kalibrierwerkzeug zu bewirken. Sekundär ist auch eine Kühlwirkung durch die im Inneren des Rohres stehende Flüssigkeitssäule zu bemerken. Der Innendruck, der durch die Flüssigkeitssäule hervorgerufen wird, kann durch das senkrechte Verschieben eines Ablaufrohres verändert werden, das die Füllhöhe innerhalb des Rohres definiert.

Aufgabe der vorliegenden Erfindung ist es, ein Verfahren und eine Vorrichtung zu schaffen, bei der auch die inneren Stege eines Profils schnell und wirksam gekühlt werden können. Dies soll durch das Einbringen eines zerstäubten Kühlmediums erfolgen, wobei jedoch als Randbedingung zu beachten ist, dass die Profilabschnitte am Ende der Extrusionslinie, d. h. nach dem Raupenabzug vollkommen trocken sind. Weiters soll die Verwendung eines Schleppstopfens od. dgl. vermieden werden, da dies bei der Profilextrusion unerwünscht ist. Eine wesentliche Aufgabe der vorliegenden Erfindung ist es jedoch auch, eine hohe Qualität des Profils im inneren Bereich sicherzustellen. Dies bedingt, dass der Dorn der Extrusionsdüse möglichst wenig abgekühlt wird.

Erfindungsgemäß ist vorgesehen, dass das Kühlmedium in Extrusionsrichtung stromabwärts von der Düse aus der Profilkammer abgesaugt wird. Überraschenderweise hat sich herausgestellt, dass hohe Profilqualität dadurch erreicht wird, dass das Kühlmedium in der Nähe der Extrusionsdüse eingebracht wird, während die Absaugung des verdampften Kühlmediums weiter stromabwärts erfolgt. Auf diese Weise kann einerseits eine relativ rasche und frühzeitige Abkühlung des Profils bewirkt werden und andererseits das Kühlmedium rasch von dem Dorn der Extrusionsdüse wegtransportiert werden. Besonders günstig hat sich in diesem Zusammenhang die Zerstäubung des Kühlmediums mit Druckluft herausgestellt. Als Kühlmedium wird im allgemeinen Wasser verwendet werden, da hier keinerlei Entsorgungsproblematik vorliegt.

Eine vollständige Trocknung des hergestellten Profils kann insbesondere dadurch erreicht werden, dass das abgesaugte Volumen größer ist als das Volumen des verdampften Kühlmediums einschließlich allfällig zugeführter Druckluft. Besonders günstig hat es sich dabei herausgestellt, wenn das abgesaugte Volumen etwa 10 bis 50% über dem Volumen des verdampften Kühlmediums einschließlich allfällig zugeführter Druckluft liegt.

Die Erfindung betrifft weiters eine Vorrichtung zum Abkühlen von extrudierten Hohlprofilen mit einer Extrusionsdüse, die mindestens einen Dorn aufweist, um eine Profilkammer auszuformen, wobei mindestens eine Düse vorgesehen ist, die in die Profilkammer gerichtet ist, um ein Kühlmedium in zerstäubter Form in die Profilkammer einzubringen, und wobei eine Absaugeinrichtung vorgesehen ist, um das Kühlmedium nach seiner Verdampfung aus der zur stromabwärtigen Seite hin offenen Profilkammer abzusaugen. Erfindungsgemäß ist die Vorrichtung so ausgebildet, dass die Absaugeinrichtung als im Wesentlichen rohrförmige Lanze ausgebildet ist, die mindestens eine Absaugöffnung aufweist, die an einer in bezug auf die Düse in Extrusionsrichtung stromabwärts gelegenen Stelle angeordnet ist. Bei einer Vorrichtung dieser Art liegen in der Profilkammer zwei gegenläufige Strömungen vor. Einerseits strömt der Dampf des Kühlmediums, der durch das Auftreffen an der Profilwand gebildet wird, in Extrusionsrichtung von der Düse zur Absaugöffnung. Entgegengesetzt dazu strömt Luft, die im Bereich der Säge in die Profilkammer eintritt, zur Absaugeinrichtung. Auf diese Weise wird die vollständige Trocknung des Profils sichergestellt.

Die Kühlung des Profils hat sich am wirksamsten herausgestellt, wenn die Düse im Bereich des Dorns ausgebildet ist. Dies bedeutet, dass die Düsenöffnung etwa in der Stirnfläche des Dorns liegt.

In einer besonders begünstigten Ausführungsvariante der Erfindung ist vorgesehen, dass die Zerstäubungseinrichtung eine Druckluftdüse aufweist. Insbesondere ist dabei günstig, wenn eine Zufuhrleitung für Druckluft zur Zerstäubungseinrichtung konzentrisch um eine Zufuhrleitung für das Kühlmedium zur Düse angeordnet ist. Auf diese Weise kann sichergestellt werden, dass eine sehr feine Zerstäubung vorliegt, so dass das Kühlmedium an der Wand des Profils schnell verdampft. Dadurch erfolgt einerseits ein optimaler Abtransport der Wärme und andererseits wird die anschließende Trocknung vereinfacht. Die Umhüllung der Zufuhrleitung für das Kühlmedium mit der Druckluftleitung im Bereich des Dorns verhindert eine unzulässige Abkühlung, so dass eine hohe Oberflächenqualität erzielt werden kann.

In der Praxis haben sich optimale Ergebnisse ergeben, wenn die Entfernung der Absaugöffnung der Düse dem 5- bis 12-fachen, vorzugsweise dem 7- bis 10-fachen Durchmesser der Profilkammer entspricht. Dabei wird als Durchmesser die größte Querschnittsabmessung der Profilkammer bezeichnet. Bei einem typischen Durchmesser von 40 mm der Profilkammer hat sich eine Entfernung von etwa 300 mm als günstig herausgestellt. Bei größeren Profilkammern sind auch Entfernungen von 500 mm sinnvoll. Indem ein Vakuum angelegt wird, das etwa 0,2 bis 0,4 bar unterhalb des Umgebungsdrucks liegt, kann eine vollständige Absaugung des Dampfes und der eingebrachten Druckluft erreicht werden. Dies ist in der Praxis dadurch leicht feststellbar, dass am offenen Ende des Profils, d.h. nach dem Raupenabzug eine Strömung in die betreffende Profilkammer hinein beobachtet wird.

In einer weiteren bevorzugten Ausführungsvariante der Erfindung ist vorgesehen, dass die Absaugeinrichtung zurückziehbar ausgebildet ist. Insbesondere beim Anfahren der Extrusionslinie werden vom Bedienungspersonal an dem noch teigigen Profilstrang unmittelbar nach der Extrusionsdüse verschiedene Manipulationen durchgeführt. Durch eine solche Ausführungsvariante kann sichergestellt werden, dass diese Manipulationen, wie etwa das Aufstechen der Profilkammern, unbehindert und ohne die Gefahr einer Beschädigung der Absaugeinrichtung möglich ist. Wenn die Absaugeinrichtung als flexibles Rohr ausgebildet ist, kann dieses in Axialrichtung verschiebbar in der Extrusionsdüse gelagert sein, so dass ein Zurückziehen leicht möglich ist.

In der Folge wird die vorliegende Erfindung anhand der in den Figuren dargestellten Ausführungsbeispiele näher erläutert.
- Fig. 1: zeigt schematisch den Aufbau einer Extrusionslinie, bei der die vorliegende Erfindung angewendet werden kann;
- Fig. 2: stellt eine seitliche Ansicht eines Extruders dar, der entsprechend der erfindungsgemäßen Vorrichtung ausgebildet ist;
- Fig. 3: zeigt den prinzipiellen Aufbau der erfindungsgemäßen Vorrichtung;
- Fig. 4: zeigt ein Detail einer Ausführungsvariante der erfindungsgemäßen Vorrichtung und
- Fig. 5: stellt eine Stirnansicht einer Extrusionsdüse dar.

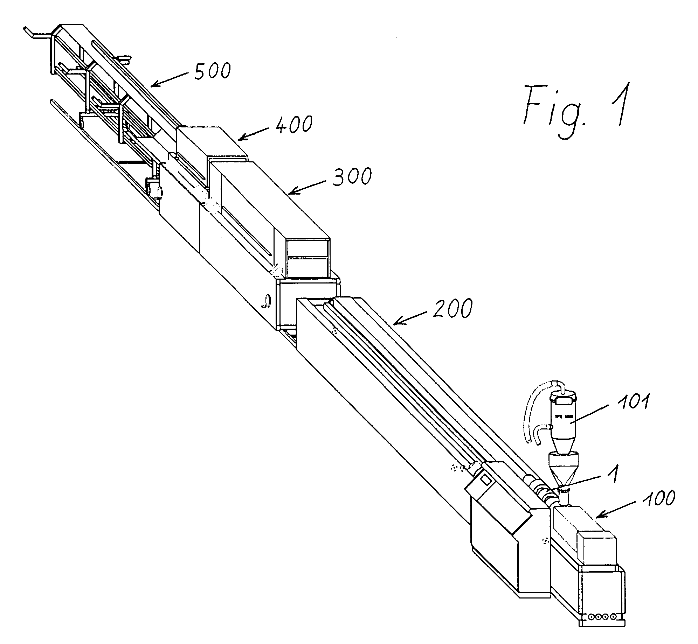

In der Fig. 1 ist eine Extrusionslinie dargestellt, wie sie allgemein zur Herstellung von PVC-Profilen verwendet wird, wie sie in der Fensterindustrie benötigt werden. Die Extrusionslinie der Fig. 1 besteht allgemein aus einem Extruder 100, einer Kalibrier- und Kühlvorrichtung 200, einem Raupenabzug 300, einer Säge 400 und einer Transportvorrichtung 500. In dem Extruder 100 wird Kunststoffgranulat in einen Zuführtrichter 101 eingeführt, geschmolzen und durch eine nicht dargestellte Extruderschnecke in eine Extrusionsdüse 1 gepresst. Der aus der Extrusionsdüse 1 austretende heiße Profilstrang wird in der Kalibrier- und Kühlvorrichtung 200 auf die erforderliche Dimension gebracht und durch Abkühlung verfestigt. Die weiteren Vorrichtungen und Vorgänge sind allgemein bekannt, und werden durch die vorliegende Erfindung nicht unmittelbar betroffen. Daher ist eine weitere Beschreibung an dieser Stelle nicht erforderlich.

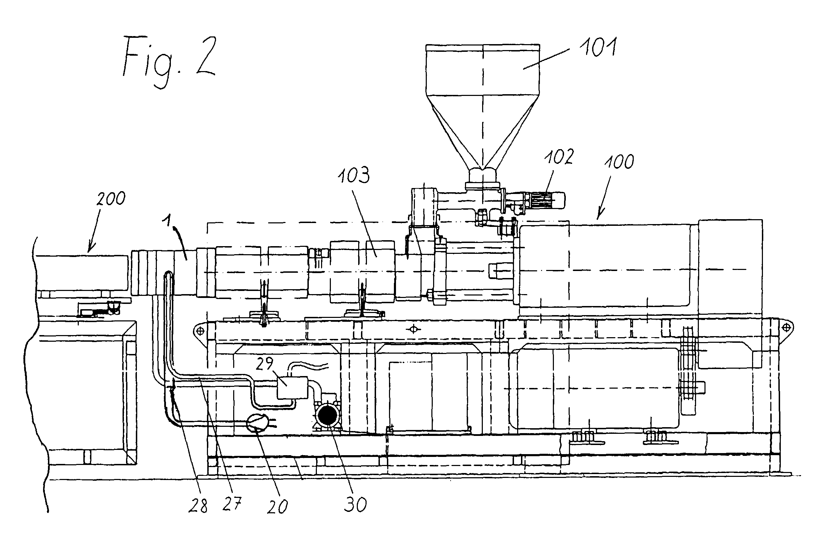

In der Fig. 2 ist ein erfindungsgemäßer Extruder detaillierter dargestellt. Das in den Zuführtrichter 101 zugeführte Kunststoffgranulat wird durch einen Fördermotor 102 in den Hauptkörper 103 des Extruders eingebracht, in dem das Granulat geschmolzen wird und durch nicht dargestellte Schnecken zu einer Extrusionsdüse 1 gefördert wird. Über eine Leitung 27 wird Wasser in die Extrusionsdüse 1 eingeführt. Typischerweise werden etwa 2 bis 3 l Wasser pro Stunde zugeführt. Die Zufuhr erfolgt drucklos, da die Förderung durch den Venturi-Effekt bewirkt wird. Über eine Rohrleitung 28, die innerhalb der Extrusionsdüse 1 die Leitung 27 konzentrisch umgibt, wird über ein Gebläse 20 Druckluft eingeblasen. Über eine Vakuumpumpe 30 wird aus Profilkammern Gas abgesaugt. Ein Wärmetauscher 29 nützt die Wärme des abgesaugten Gases zur Erwärmung des zugeführten Kühlmediums.

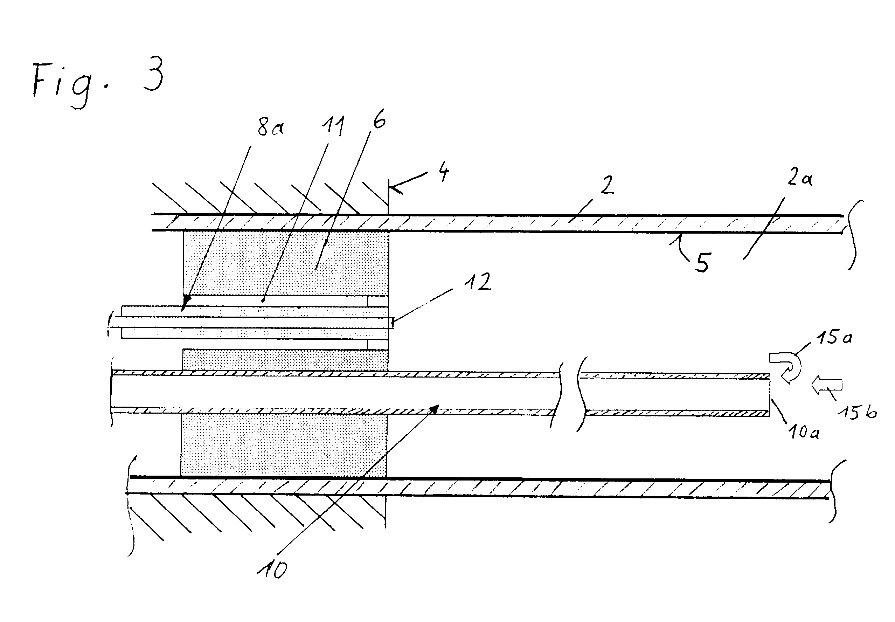

In der Fig. 3 ist schematisch ein Detail einer Ausführungsvariante der Erfindung in grundsätzlicher Weise dargestellt. In die Profilkammer 2a eines Profils 2 ragt ein Rohr 10 aus Teflon. In einer Düse 12 wird Wasser durch Druckluft zerstäubt, die über einen ringförmigen Spalt 11 zugeführt wird, der ein Rohr 8a zur Zufuhr des Wassers umgibt. Die Druckluft wird mit etwa 2 bis 4 bar Druck zugeführt.

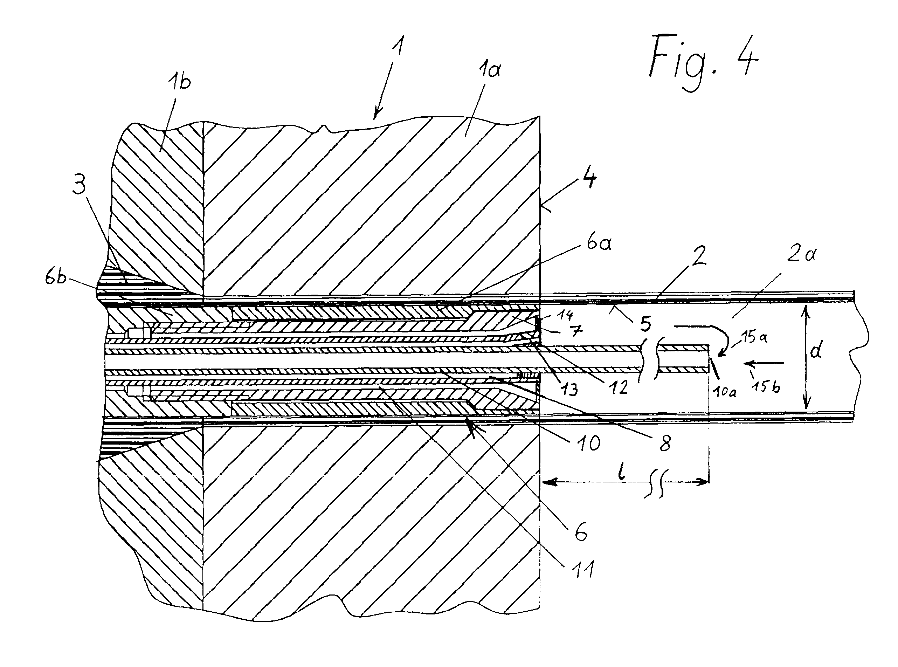

In der Fig. 4 ist ein teilweiser Schnitt einer Ausführungsvariante der vorliegenden Erfindung detaillierter dargestellt. Innerhalb der Extrusionsdüse 1, die eine Frontplatte 1a aufweist, die auf einer Basis 1b befestigt ist, liegt ein Kunststoffmaterial, aus dem das Profil herzustellen ist, in einem Kanal 3 in zähflüssiger Form vor. Nach dem Austritt an der Stirnfläche 4 der Extrusionsdüse 1 liegt das Profil 2 mit einer Profilkammer 2a in einer teigigen, noch nicht verfestigten Form vor. In an sich bekannter Weise tritt das Profil 2 im Anschluss an den Extruder 1 in eine Trockenkalibriervorrichtung ein, die aus Vereinfachungsgründen hier nicht dargestellt ist. Zur Formung der inneren Oberfläche 5 des Profils 2 ist in der Extrusionsdüse 1 ein Dorn 6 angeordnet. Der Dorn 6 besteht aus einem vorderen Teil 6a und einem hinteren Teil 6b an dem der vordere Teil 6a mit einer Schraube 7 befestigt ist. Im Inneren der hohlgebohrten Schraube 7 ist ein erstes Rohr 9 angeordnet, in dem sich konzentrisch ein weiteres Rohr 10 befindet, das aus Teflon hergestellt ist. Dieses Rohr 10 ragt von der Stirnfläche 4 in der Form einer Lanze in die Profilkammer 2a des Profils 2, und es steht um eine Länge l vor, die etwa dem 1,6fachen Innendurchmesser d der Kammer 2a entspricht, und es endet in einer Absaugöffnung 10a. Der Innendurchmesser des Rohres 10 beträgt etwa 4 mm.

Zwischen dem äußeren Umfang des ersten Rohres 9 und der Schraube 7 ist ein ringförmiger Spalt 11 ausgebildet, der durch eine Scheibe 14 verschlossen ist und durch den Druckluft zugeführt wird. Der Spalt 11 wird durch die Leitung 28 versorgt. In dem Spalt 8 zwischen den Rohren 9 und 10 wird Wasser als Kühlmedium transportiert, das über die Leitung 27 zugeführt wird. Der Spalt 8 öffnet sich zur Profilkammer 2a in der Form einer Düse 12, wobei durch einen Kanal 13 Druckluft aus dem Spalt 8 zur Zerstäubung des Wassers in der Düse 12 zugeführt wird. Das zerstäubte Wasser verdampft an der inneren Oberfläche 5 des Profils 2 und kühlt diese ab. Die entstehenden Dämpfe werden durch das Rohr 10 abgesaugt. Die Stärke der Absaugung ist dabei so eingestellt, dass das abgesaugte Volumen dem doppelten Volumen des entstehenden Dampfes zuzüglich der zur Zerstäubung eingeblasenen Druckluft entspricht. Dadurch wird nicht nur der Dampf zuverlässig entlang dem Pfeil 15a abgezogen, sondern auch eine Strömung entgegen der Extrusionsrichtung entlang des Pfeils 15b bewirkt, die eine Trocknung der Oberfläche 5 sicherstellt.

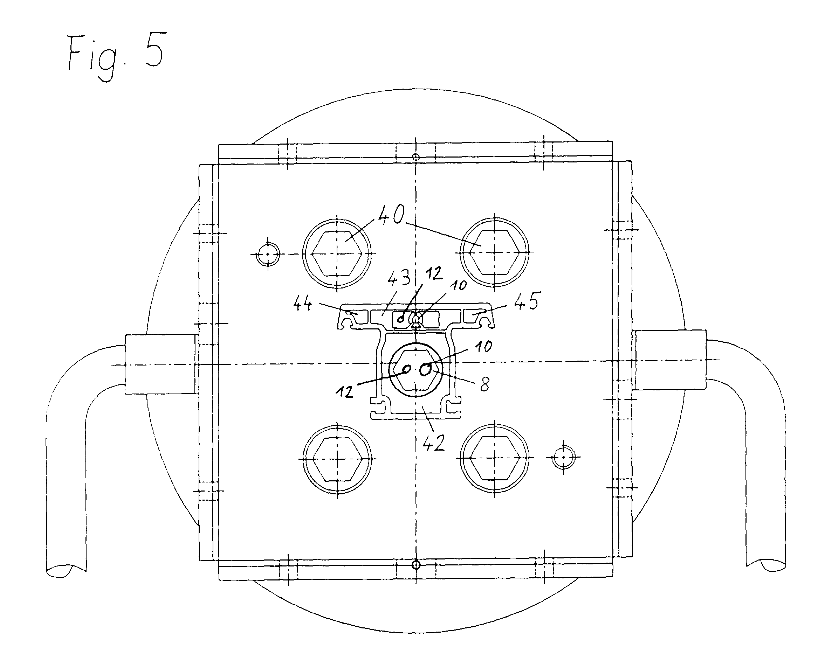

In der Fig. 5 ist die Stirnfläche einer erfindungsgemäßen Extrusionsdüse dargestellt. Schrauben 40 dienen zur Herstellung des inneren Zusammenhangs der Extrusionsdüse 1. Der Extruderspalt 41 besitzt die Form des herzustellenden Profils, wobei gegebenenfalls gewisse dimensionsmäßige Abweichungen vorliegen können, die durch die anschließenden Kühl- und Kalibriervorgänge ausgeglichen werden. Durch die Stege des Profils wird der Innenraum des Profils in mehrere Hohlkammern unterteilt, die in der Extrusionsdüse 1 den Dornen 42, 43, 44 und 45 entsprechen. In den Dornen 42 und 43 der größeren Hohlkammern des Profils sind die erfindungsgemäßen Vorrichtungen zur Innenkühlung vorgesehen. Auf diese Weise können alle wesentlichen Abschnitte des Profils, und zwar insbesondere auch die von außen nicht zugänglichen Innenstege, einer wirksamen Kühlung unterworfen werden.

Die vorliegende Erfindung ermöglicht es, ein extrudiertes Hohlprofil auch an der Innenseite wirksam zu kühlen. Dabei kann die Beeinflussung des Extruders durch das Kühlmedium gering gehalten werden.

## Patentansprüche

1. Verfahren zum Abkühlen von extrudierten Hohlprofilen (2), die insbesondere zur Herstellung von Fenstern bestimmt sind, bei dem das Hohlprofil (2) durch eine Extrusionsdüse (1) ausgestoßen wird, um in Extrusionswerkzeugen abgekühlt und kalibriert zu werden, mit folgenden Schritten:
- Eindüsen eines fein zerstäubten flüssigen Kühlmediums durch eine Düse (12) in eine Profilkammer (2a), die zur stromabwärtigen Seite des Profils (2) hin offen ist;
- Vollständiges Verdampfen des Kühlmedium an den Wänden (5) der Profilkammer (2a);
- Absaugen des verdampften Kühlmediums aus der Profilkammer (2a),
**dadurch gekennzeichnet,** dass das Kühlmedium im in Extrusionsrichtung stromabwärts von der Düse (12) aus der Profilkammer (2a) abgesaugt wird.

2. Verfahren nach Anspruch 1, **dadurch gekennzeichnet,** dass die Zerstäubung des Kühlmediums durch Druckluft erfolgt, die zur Düse (12) zugeführt wird.

3. Verfahren nach einem der Ansprüche 1 oder 2, **dadurch gekennzeichnet,** dass das abgesaugte Volumen größer ist als das Volumen des verdampften Kühlmediums, einschließlich allfällig zugeführter Druckluft.

4. Verfahren nach Anspruch 3, **dadurch gekennzeichnet,** dass das abgesaugte Volumen etwa 10 bis 50 % über dem Volumen des verdampften Kühlmediums einschließlich allfällig zugeführter Druckluft liegt.

5. Vorrichtung zum Abkühlen von extrudierten Hohlprofilen mit einer Extrusionsdüse (1), die mindestens einen Dorn (6) aufweist, um eine Profilkammer (2a) auszuformen, wobei mindestens eine Düse (12) vorgesehen ist, die in die Profilkammer (2a) gerichtet ist, um ein Kühlmedium in zerstäubter Form in die Profilkammer (2a) einzubringen, und wobei eine Absaugeinrichtung vorgesehen ist, um das Kühlmedium nach seiner Verdampfung aus der zur stromabwärtigen Seite hin offenen Profilkammer (2a) abzusaugen, **dadurch gekennzeichnet,** dass die Absaugeinrichtung als im Wesentlichen rohrförmige Lanze (10) ausgebildet ist, die mindestens eine Absaugöffnung (10a) aufweist, die an einer in bezug auf die Düse (12) in Extrusionsrichtung stromabwärts gelegenen Stelle angeordnet ist.

6. Vorrichtung nach Anspruch 5, **dadurch gekennzeichnet,** dass die Düse (12) im Bereich des Dorns (6) ausgebildet ist.

7. Vorrichtung nach einem der Ansprüche 5 oder 6, **dadurch gekennzeichnet**, dass die Zerstäubungseinrichtung eine Druckluftdüse aufweist.

8. Vorrichtung nach Anspruch 7, **dadurch gekennzeichnet,** dass eine Zufuhrleitung (11; 28) für Druckluft zur Zerstäubungseinrichtung konzentrisch um eine Zufuhrleitung (8; 27) für das Kühlmedium zur Düse (12) angeordnet ist.

9. Vorrichtung nach einem der Ansprüche 5 bis 8, **dadurch gekennzeichnet,** dass die Entfernung l der Absaugöffnung (10a) von der Düse (12) dem 5- bis 12-fachen, vorzugsweise dem 7- bis 10-fachen Durchmesser d der Profilkammer (2a) entspricht.

10. Vorrichtung nach einem der Ansprüche 5 bis 9, **dadurch gekennzeichnet,** dass die Absaugeinrichtung (10) zurückziehbar ausgebildet ist.
